# EUROPÄISCHE PATENTSCHRIFT

(11) **EP 4 240 619 B1**
(45) Veröffentlichungstag und Bekanntmachung des Hinweises auf die Patenterteilung: **05.11.2025**
(21) Anmeldenummer: 21783428.2
(22) Anmeldetag: 23.09.2021
(51) Int. Cl.: B60R 21/015, B60N 2/00

(54) **VERFAHREN ZUM BETREIBEN EINER IDENTIFIZIERUNGSVORRICHTUNG EINES SITZES, SOWIE IDENTIFIZIERUNGSVORRICHTUNG**
METHOD FOR OPERATING AN IDENTIFICATION DEVICE OF A SEAT, AND IDENTIFICATION DEVICE
PROCÉDÉ DE FONCTIONNEMENT D'UN DISPOSITIF D'IDENTIFICATION D'UN SIÈGE, ET DISPOSITIF D'IDENTIFICATION

(30) Priorität: 05.11.2020 DE 102020006794
(43) Veröffentlichungstag der Anmeldung: 13.09.2023
(73) Patentinhaber: Mercedes-Benz Group AG, 70372 Stuttgart (DE)
(72) Erfinder: BERON, Marco, 70794 Filderstadt (DE)
(74) Vertreter: Novagraaf Group
(86) Internationale Anmeldenummer: PCT/EP2021/076187
(87) Internationale Veröffentlichungsnummer: WO 2022/096191

(56) Entgegenhaltungen:
- JP-A- 2001 187 541
- US-A1- 2005 131 607
- US-A1- 2006 005 630
- US-A1- 2008 157 510
- US-A1- 2015 175 111

## Beschreibung

Die Erfindung betrifft ein Verfahren zum Betreiben einer Identifizierungsvorrichtung eines Sitzes eines Kraftfahrzeugs gemäß dem Oberbegriff von Patentanspruch 1. Ferner betrifft die Erfindung eine Identifizierungsvorrichtung.

Aus dem Stand der Technik sind bereits Verfahren zur Identifizierung einer Person auf einem Sitz bekannt. Insbesondere kann hierbei eine Klassifizierung stattfinden, ob es sich bei der Person auf dem Sitz um beispielsweise ein Kind in einem Kindersitz handelt oder um eine erwachsene Person, wobei unter Erwachsen insbesondere Personen zu verstehen sind, welche ohne Sitzhilfe auf dem Sitz Platz nehmen können. Ferner ist aus dem Stand der Technik bekannt, dass beispielsweise bei dem Erkennen eines Kindersitzes auf dem Sitz eine entsprechende Deaktivierung einer Airbageinrichtung durchgeführt werden kann. Dies führt insbesondere zur erhöhten Sicherheit für das in dem Kindersitz befindliche Kind, da eine Auslösung des Airbags verhindert ist, sollte der Kindersitz erkannt werden. Hierzu sind ebenfalls aus dem Stand der Technik sogenannte statische sowie dynamische Verfahren bekannt. Beim statischen Verfahren wird lediglich ein Druck auf den Sitz erfasst und in Abhängigkeit davon bestimmt, ob ein Kindersitz auf dem Sitz vorhanden ist oder nicht. Beim dynamischen Verfahren werden auch Eigenbewegungen des Kraftfahrzeugs, insbesondere Beschleunigungen des Kraftfahrzeugs, berücksichtigt, sodass eine verbesserte Erkennung eines Kindersitzes während der Fahrt ebenfalls ermöglicht ist.

Die US 2003004628 A1 beschreibt eine gewichtsbasierte Methode zur Insassencharakterisierung, wobei diese zuverlässig zwischen einem Kind und einem kleinen Erwachsenen und einem fest angeschnallten Kindersitz auf Grundlage einer Varianz des erfassten Insassengewichts und einer Varianz der Fahrzeugbeschleunigung unterscheidet. Die Gewichtsvarianz und die Beschleunigungsvarianz werden verwendet, um eine relative oder normierte Varianz zu bestimmen, die die Auswirkungen des Betriebs des Fahrzeugs auf einer rauen Straßenoberfläche kompensiert. Der Insasse wird als Kindersitz charakterisiert, wenn die normierte Varianz für ein vorbestimmtes Intervall unter einer ersten Schwelle liegt, und als Kind oder kleiner Erwachsener, wenn die normierte Varianz für ein vorbestimmtes Intervall eine zweite Schwelle überschreitet.

Die EP 1470968 A1 umfasst ein Insassenerkennungssystem für Fahrzeuge umfassend wenigstens einen unterhalb des Schaumstoffs eines Fahrzeugsitzes angeordneten Drucksensor, wenigstens einen Temperatursensor und eine elektronische Steuer- und/oder Auswerteeinheit, mit der die Sensoren verbunden sind. Es sind Mittel vorgesehen, um das insbesondere bei Änderungen der Umgebungstemperatur gegebene Zeitverhalten des Ausgangssignals des in einem Abstand von dem Drucksensor beziehungsweise dem Sitzschaum angeordneten Temperatursensors an das Zeitverhalten der im Bereich des Drucksensors beziehungsweise des Sitzschaums vorherrschender Temperaturen auszugleichen.

Die JP 2001 187541 A offenbart ein Verfahren gemäß dem Oberbegriff des Anspruchs 1. Aufgabe der vorliegenden Erfindung ist es, ein Verfahren sowie eine Identifizierungsvorrichtung zu schaffen, mittels welchen eine verbesserte Identifizierung beziehungsweise Klassifizierung von Personen auf dem Sitz durchgeführt werden kann. Diese Aufgabe wird durch ein Verfahren sowie durch eine Identifizierungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer Identifizierungsvorrichtung eines Sitzes eines Kraftfahrzeugs, gemäß der Definition des Anspruchs 1.

Es ist vorgesehen, dass eine Geschwindigkeitsvarianz einer Geschwindigkeit des Kraftfahrzeugs mittels der elektronischen Recheneinrichtung bestimmt wird und in Abhängigkeit der bestimmten Geschwindigkeitsvarianz entschieden wird, ob während der Bewegung des Kraftfahrzeugs eine Identifizierung durchgeführt wird.

Dadurch ist eine verbesserte Identifizierung beziehungsweise Bestimmung, ob es sich um einen Kindersitz oder um einen Erwachsenen handelt, ermöglicht.

Insbesondere löst die Erfindung damit das Problem, dass beispielsweise bei einer sehr dynamischen Fahrweise mit montiertem Kindersitz das Entscheidungskriterium des dynamischen Algorithmus, mit anderen Worten die relative Varianz, ungewollt ansteigen kann. Unter sehr dynamischer Fahrweise sind insbesondere starke Beschleunigungs- und Verzögerungsmanöver sowie aufeinanderfolgende Beschleunigungs- und Verzögerungsmanöver anzusehen. Dies hat den Hintergrund darin, dass eine stärkere stattfindende Beeinflussung der Druckvarianz gegenüber der Beschleunigungsvarianz insbesondere in einer z-Richtung des Kraftfahrzeugs zu verzeichnen ist.

Zur möglichst klaren Identifikation relevanter Situationen hat sich die Analyse der Geschwindigkeitsvarianz als zielführend herausgestellt. Hierbei kann insbesondere die Berechnung parametrisierbar sein, beispielsweise über die Anzahl der Geschwindigkeitswerte, die für die Berechnung der Varianz herangezogen werden. Des Weiteren kann eine Filterung des berechneten Werts, beispielsweise über einen gleitenden Mittelwert, realisiert werden. Übersteigt nun die Geschwindigkeitsvarianz eine parametrisierbare Schwelle, so kann mindestens für die Dauer des Überschreitens eine entsprechende Reaktion erfolgen, beispielsweise die Rücksetzung der relativen Varianz auf einen vorhandenen, parametrisierbaren Startwert. Des Weiteren kann zur Stabilisierung eine Hysterese- oder eine ähnliche Funktion, beispielsweise eine Verlängerung der Reaktion um eine parametrisierbare Zeitdauer, implementiert werden.

Dies hat insbesondere den Vorteil, dass bei relevanten Situationen, wie beispielsweise in starken Beschleunigungs- und Verzögerungsmanövern, entsprechende Beschleunigungswechsel identifiziert werden können. Eine singuläre Auswertung der absoluten Pedalstellung, wie es beispielsweise im Stand der Technik der Fall ist, kann diesen Wechsel nicht identifizieren. Bei beispielsweise einer Identifizierung aufgrund der Pedalstellung kann es zu False-Positiv-Situationen kommen. Beispielsweise würde bei Talfahrten, bei welchen ein anhaltendes, starkes Betätigen des Bremspedals durchgeführt wird, eine entsprechende Situation erkannt werden. Ferner würde bei Bergfahrten, bei welchen ein anhaltendes, starkes Betätigen des Fahrpedals durchgeführt wird, ebenfalls eine solche Situation erkannt werden. Ferner wird es auf Basis der Pedalstellung ermöglicht, False-Negativ zu bestimmen. Beispielsweise kann bei einem Beschleunigungswechsel unterhalb des absoluten Schwellwerts eine entsprechende False-Negativ erkannt werden.

Gemäß der Erfindung wird unterhalb eines vorgegebenen Geschwindigkeitsschwellwerts ein aktueller Startwert für die relative Varianz bestimmt. Insbesondere kann beispielsweise diese vorgegebene Geschwindigkeit unter vier Kilometern pro Stunde liegen. Es wird dann, beispielsweise mittels eines sogenannten statischen Algorithmus, welcher lediglich den aktuellen Druck berücksichtigt, die relative Varianz entsprechend bestimmt werden. Dadurch kann zuverlässig ein Startwert für die relative Varianz erzeugt werden, wobei dann wiederum auf Basis des aktuellen Startwerts während der Bewegung des Kraftfahrzeugs dynamisch die relative Varianz bestimmt wird, wodurch eine entsprechende Identifizierung der Person durchgeführt werden kann.

Ebenfalls vorteilhaft ist, wenn oberhalb eines vorgegebenen Schwellwerts für die Geschwindigkeitsvarianz eine Identifizierung auf Basis der aktuell bestimmten relativen Varianz unterdrückt wird. Dadurch ist es ermöglicht, dass beispielsweise Falschidentifizierungen während der relevanten Situationen unterdrückt werden können. Somit kann keine Falschidentifizierung während der beispielsweise starken Beschleunigungen und Beschleunigungswechsel unterdrückt werden. Somit kann eine verbesserte Identifizierung der Person über die gesamte Fahrt hinweg realisiert werden.

Es hat sich weiterhin als vorteilhaft erwiesen, wenn oberhalb des Schwellwerts für die Geschwindigkeitsvarianz der Startwert der relativen Varianz genutzt wird. Mit anderen Worten wird, sollte die Geschwindigkeitsvarianz den Schwellwert überschreiten, der Startwert der relativen Varianz genutzt. Es wird somit zurückgesetzt und erneut bestimmt. Dadurch kann ein zuverlässiger Algorithmus bereitgestellt werden zur Bestimmung der Person auf dem Sitz.

In einer weiteren vorteilhaften Ausgestaltungsform wird die Geschwindigkeitsvarianz in Abhängigkeit einer Filterung von Geschwindigkeitswerten und/oder in Abhängigkeit einer Anzahl von Geschwindigkeitswerten vorgegeben. Somit kann die Bestimmung der Geschwindigkeitsvarianz parametrisierbar sein. Die einzelnen Geschwindigkeitswerte können dabei ferner bereits vorgeglättet sein und für die Bestimmung der Geschwindigkeitsvarianz herangezogen werden. Des Weiteren kann eine Filterung des berechneten Wertes, beispielsweise über einen gleitenden Mittelwert, realisiert werden.

Weiterhin vorteilhaft ist, wenn zusätzlich eine Lenkwinkelvarianz eines Lenkwinkels bestimmt wird und in Abhängigkeit der bestimmten Lenkwinkelvarianz entschieden wird, ob während der Bewegung des Kraftfahrzeugs eine Identifizierung durchgeführt wird. Dadurch ist es ermöglicht, dass eine weitere Erkennung entsprechender Fahrsituationen realisiert werden kann. Die Lenkwinkelvarianzbestimmung erfolgt insbesondere analog zur Geschwindigkeitsvarianzbestimmung.

Ebenfalls vorteilhaft ist, wenn zusätzlich ein Steuersignal eines Assistenzsystems des Kraftfahrzeugs an die Identifizierungsvorrichtung übertragen wird und in Abhängigkeit des übertragenen Steuersignals entschieden wird, ob während der Bewegung des Kraftfahrzeugs eine Identifizierung durchgeführt wird. Insbesondere können somit zusätzlich instabile/dynamische Fahrsituationen erkannt werden. Beispielsweise kann von einem Antiblockiersystem als Assistenzsystem ein entsprechender Eingriff als Steuersignal übertragen werden, wobei dann in einer solchen Situation eine Identifizierung unterdrückt wird. Ferner können auch Anforderungen für eine Pre-Safe-Auslösung hierzu genutzt werden. Des Weiteren kann auch ein elektronisches Stabilisierungsprogramm als Assistenzsystem einen entsprechenden Eingriff als Steuersignal an die Identifizierungsvorrichtung übertragen.

In einer weiteren vorteilhaften Ausgestaltungsform wird mittels eines Drucksensors in dem Sitz der aktuelle Druck auf den Sitz erfasst und in Abhängigkeit des aktuell erfassten Drucks wird die Druckvarianz mittels der elektronischen Recheneinrichtung bestimmt. Beispielsweise kann der Drucksensor in einer Druckmatte des Sitzes angeordnet sein. Dadurch ist eine zuverlässige Bestimmung der Druckvarianz ermöglicht.

Ferner hat es sich als vorteilhaft erwiesen, wenn bei der Erkennung eines Kindersitzes die Airbageinrichtung deaktiviert wird und bei der Erkennung eines Erwachsenen die Airbageinrichtung aktiviert wird. Unter Erwachsener ist vorliegend insbesondere eine Person anzusehen, welche keine Sitzerhöhung benötigt. Bei dem Erwachsenen kann es sich vorliegend sozusagen auch um Jugendliche handeln, welche keine Sitzunterstützung benötigen. Bei einer Deaktivierung des Airbags, beispielsweise des Beifahrerairbags, kann somit bei der Erkennung eines Kindersitzes verhindert werden, dass dieser auslöst und es dann zu Verletzungen des Kindes innerhalb des Kindersitzes führen kann.

Ein weiterer Aspekt der Erfindung betrifft eine Identifizierungsvorrichtung eines Sitzes eines Kraftfahrzeugs zum Identifizieren eines Kindersitzes oder eines Erwachsenen auf dem Sitz, mit zumindest einer elektronischen Recheneinrichtung, wobei die Identifizierungsvorrichtung zum Durchführen eines Verfahrens nach dem vorhergehenden Aspekt ausgebildet ist. Insbesondere wird das Verfahren mittels der Identifizierungsvorrichtung durchgeführt.

Ein nochmals weiterer Aspekt der Erfindung betrifft ein Kraftfahrzeug mit einer Identifizierungsvorrichtung gemäß dem vorhergehenden Aspekt. Das Kraftfahrzeug ist insbesondere als Personenkraftwagen ausgebildet.

Dabei zeigen:
- Fig. 1: eine schematische Perspektivansicht einer Ausführungsform einer Identifizierungsvorrichtung;
- Fig. 2: ein schematisches Diagramm mit einer Aufzeichnung einer Geschwindigkeit des Kraftfahrzeugs und einer Aufzeichnung der dazugehörigen Geschwindigkeitsvarianz; und
- Fig. 3: ein schematisches Diagramm gemäß einer Ausführungsform des Verfahrens.

In den Fig. sind gleiche oder funktionsgleiche Elemente mit den gleichen Bezugszeichen versehen.

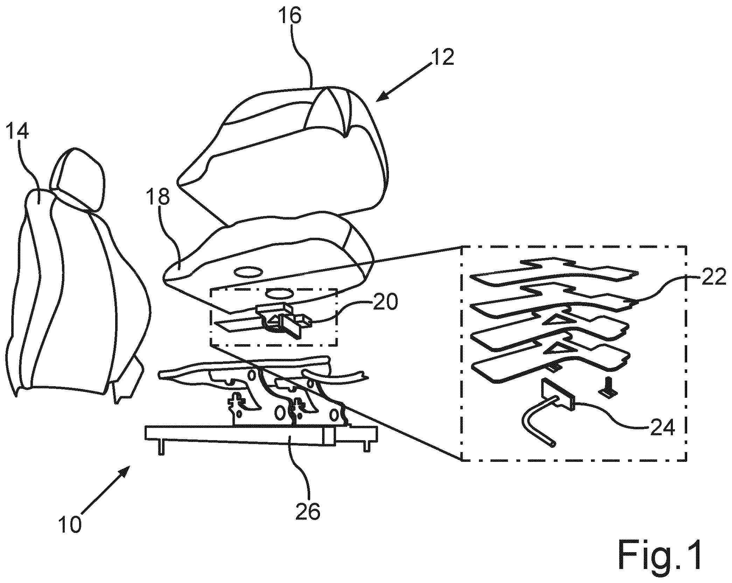

Fig. 1 zeigt eine schematische Perspektivansicht einer Identifizierungsvorrichtung 10 für ein nicht dargestelltes Kraftfahrzeug. Die Identifizierungsvorrichtung 10 ist insbesondere für einen Sitz 12 des Kraftfahrzeugs ausgebildet. Der Sitz 12 wiederum weist insbesondere eine Rückenlehne 14, einen Bezug 16, eine Schaumauflage 18 sowie einen Drucksensor 20 auf. Der Drucksensor 20 wiederum ist insbesondere aus zumindest einer Silikon-gefüllten Matte 22 ausgebildet. Ferner weist die Identifizierungsvorrichtung 10 zumindest eine elektronische Recheneinrichtung 24 mit Druck- und Temperatursensor auf. Der Sitz 12 weist ferner eine Unterfederung 26 auf.

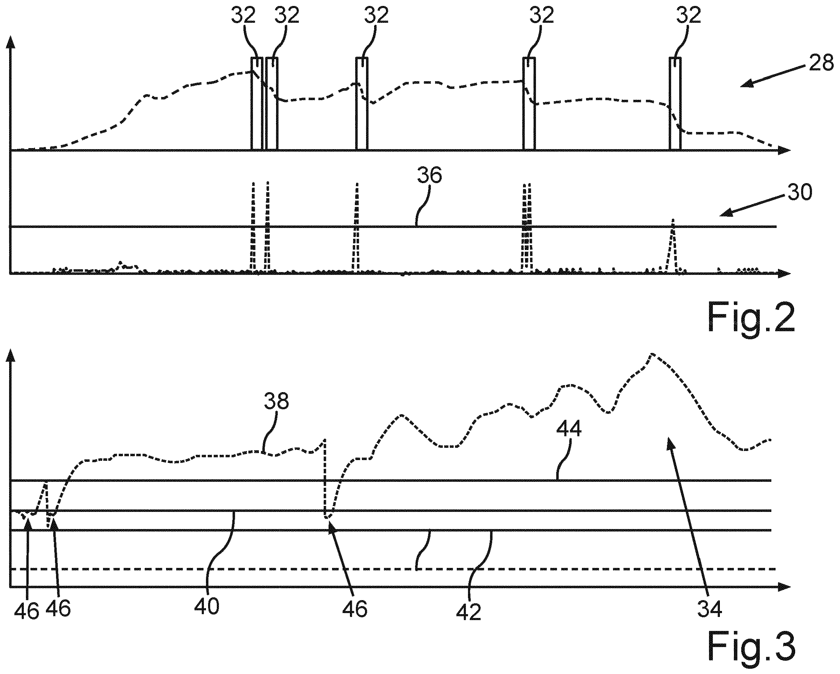

Fig. 2 zeigt ein schematisches Diagramm einer Geschwindigkeit 28 des Kraftfahrzeugs und einer entsprechenden bestimmten Geschwindigkeitsvarianz 30.

In den gekennzeichneten Bereichen sind insbesondere relevante Situationen 32 zu verzeichnen, in denen vorliegend starke Bremsmanöver stattfinden. Dies ist insbesondere durch das Abfallen der Geschwindigkeitskurve dargestellt. Die relevanten Situationen 32 sind dabei als Spitzen innerhalb der Geschwindigkeitsvarianzkurve ebenfalls zu sehen.

Beim Verfahren zum Betreiben der Identifizierungsvorrichtung 10 des Sitzes 12 des Kraftfahrzeugs wird die Identifizierung eines Kindersitzes auf dem Sitz 12 oder eines Erwachsenen auf dem Sitz 12 mittels der elektronischen Recheneinrichtung 24 der Identifizierungsvorrichtung 12 durchgeführt, und es wird in Abhängigkeit der Identifizierung eine nicht dargestellte Airbageinrichtung des Sitzes 12 aktiviert. Es wird eine relative Varianz 34 (Fig. 3) aus einem Verhältnis von einer Druckvarianz eines Drucks auf den Sitz 12 und einer Beschleunigungsvarianz einer Beschleunigung des Kraftfahrzeugs während einer Bewegung des Kraftfahrzeugs bestimmt und in Abhängigkeit von der relativen Varianz 34 wird die Identifizierung durchgeführt und die Airbageinrichtung aktiviert.

Es ist vorgesehen, dass die Geschwindigkeitsvarianz 30 der Geschwindigkeit 28 des Kraftfahrzeugs mittels der elektronischen Recheneinrichtung 24 bestimmt wird und in Abhängigkeit der bestimmten Geschwindigkeitsvarianz 30 entschieden wird, ob während der Bewegung des Kraftfahrzeugs eine Identifizierung durchgeführt wird. Insbesondere zeigt die Fig. 2, dass in den Bereichen einer relevanten Situation 32 eine Identifizierung unterdrückt wird. Insbesondere kann hierzu vorgesehen sein, dass beispielsweise oberhalb eines vorgegebenen Schwellwerts 36 für die Geschwindigkeitsvarianz 30 eine Identifizierung auf Basis der aktuell bestimmten relativen Varianz 34 unterdrückt wird.

Ferner kann insbesondere vorgesehen sein, dass die Geschwindigkeitsvarianz 30 in Abhängigkeit einer Filterung von Geschwindigkeitswerten und/oder in Abhängigkeit einer Anzahl von Geschwindigkeitswerten vorgegeben wird.

Insbesondere zeigt somit die Fig. 2 eine starke einfache Bremsung. Dieses Verhalten soll erkannt werden und danach eine Identifizierung unterdrückt werden. Dies hat den Hintergrund insbesondere darin, dass bei einer sehr dynamischen Fahrweise, wie beispielsweise dem starken Bremsen, die relative Varianz 34 ungewollt ansteigen kann. Hintergrund ist hierbei die relativ gesehen stärker stattfindende Beeinflussung der Druckvarianz gegenüber der Beschleunigungsvarianz insbesondere in z-Richtung. Insbesondere zur möglichst klaren Identifikation der relevanten Situationen 32 hat sich die Analyse der Geschwindigkeitsvarianz 30 als zielführend herausgestellt. Die Bestimmung kann hierbei parametrisierbar sein, beispielsweise über die Anzahl der Geschwindigkeitswerte, insbesondere von vorgeglätteten Geschwindigkeitswerten, die für die Berechnung der Geschwindigkeitsvarianz 30 herangezogen werden. Ferner kann eine Filterung des berechneten Wertes, beispielsweise über einen gleitenden Mittelwert, realisiert werden. Übersteigt der Geschwindigkeitsvarianz 30 eine parametrisierbare Schwelle, insbesondere den Schwellwert 36, kann mindestens für die Dauer des Überschreitens eine entsprechende Reaktion erfolgen, beispielsweise die Rücksetzung der relativen Varianz 34 auf den vorhandenen, parametrisierbaren Startwert. Des Weiteren kann zur Stabilisierung eine Hysterese- oder ähnliche Funktion beispielsweise Verlängerung der Reaktion um eine parametrisierbare Zeitdauer, implementiert werden.

Das erfindungsgemäße Verfahren kann bei alleiniger Umsetzung des statischen Algorithmus ebenfalls zur Stabilisierung herangezogen werden. Ferner kann zusätzlich eine Lenkwinkelvarianz eines Lenkwinkels bestimmt werden und in Abhängigkeit der bestimmten Lenkwinkelvarianz entschieden werden, ob während der Bewegung des Kraftfahrzeugs eine Identifizierung durchgeführt wird. Dadurch ist es ermöglicht, dass eine weitere Erkennung entsprechender Fahrsituationen realisiert werden kann. Die Lenkwinkelvarianzbestimmung erfolgt insbesondere analog zur Geschwindigkeitsvarianzbestimmung. Ebenfalls kann zusätzlich ein Steuersignal eines Assistenzsystems des Kraftfahrzeugs an die Identifizierungsvorrichtung 10 übertragen werden und in Abhängigkeit des übertragenen Steuersignals entschieden werden, ob während der Bewegung des Kraftfahrzeugs eine Identifizierung durchgeführt wird. Insbesondere können somit zusätzlich instabile/dynamische Fahrsituationen erkannt werden. Beispielsweise kann von einem Antiblockiersystem als Assistenzsystem ein entsprechender Eingriff als Steuersignal übertragen werden, wobei dann in einer solchen Situation eine Identifizierung unterdrückt wird. Ferner können auch Anforderungen für eine Pre-Safe-Auslösung hierzu genutzt werden. Des Weiteren kann auch ein elektronisches Stabilisierungsprogramm als Assistenzsystem einen entsprechenden Eingriff als Steuersignal an die Identifizierungsvorrichtung 10 übertragen.

Fig. 3 zeigt ein weiteres schematisches Diagramm mit der relativen Varianz 34. Insbesondere zeigt die Fig. 3 eine gefilterte relative Varianz 38, einen Startwert 40 für die relative Varianz 34, einen Schwellwert 42 für die relative Varianz 34 zur Erkennung eines Kindersitzes und einen Schwellwert 44 für die relative Varianz 34 für die Erkennung einer Person, insbesondere eines Erwachsenen. Vorliegend ist insbesondere zu erkennen, dass bei der Bewegung des Kraftfahrzeugs ein Erwachsener auf dem Sitz 12 Platz genommen hat. Der Startwert 40 für die relative Varianz 34 wird insbesondere bei einer Geschwindigkeit von kleiner vier Kilometer pro Stunde bestimmt. Bei einer Geschwindigkeit von größer vier Kilometer pro Stunde wird dann der parametrisierbare Startwert 40 ausgegeben. Vorliegend ist insbesondere gezeigt, sollte die relative Varianz 34 oberhalb des Schwellwerts 44 liegen, so wird die entsprechende Airbageinrichtung eingeschaltet. Sollte die relative Varianz 34 unterhalb des Schwellwerts 42 liegen, so wird die Airbageinrichtung ausgeschaltet.

Die Bestimmung der Geschwindigkeitsvarianz 30 erfolgt insbesondere analog wie die Bestimmung der Druckvarianz und der Beschleunigungsvarianz ab vier Kilometer pro Stunde. Hierzu wird eine entsprechende Varianzweite, beispielsweise über eine Filtereinrichtung, sowie entsprechende Vorfilterungen benötigt. Es ist nun vorgesehen, sollte die Geschwindigkeitsvarianz 30 oberhalb des entsprechenden Schwellwerts 36 liegen, so erfolgt ein Rücksetzen der relativen Varianz 34 auf den Startwert 40, was insbesondere durch die Pfeile 46 dargestellt ist. Hierdurch kann ein sicherer Zustand hergestellt werden. Die Ausgabe der Geschwindigkeitsvarianz 30 kann dabei in Raw-Frames durchgeführt werden. Beispielsweise kann anstelle eines relativen Drucks eine Direktausgabe für Versuchsfahrten sinnvoll sein.

Insgesamt schlägt somit der erfindungsgemäße Gedanke vor, die Personenerkennung und -klassifizierung über den Drucksensor 20 im Sitz 12 dahingehend zu verbessern, indem die Geschwindigkeitsvarianz 30 oberhalb des Schwellwerts 36 dazu führt, dass entsprechende Signale nicht benutzt werden beziehungsweise dies als Ausschluss für die aktuelle Bewertung genutzt wird und die Parameter erstmals zurückgesetzt werden, um bei fahrdynamischen Schwankungen falsche Auswertungen zu verhindern und den Bestimmungsalgorithmus zu stabilisieren. Als wesentliches Merkmal des Verfahrens ist insbesondere vorgesehen, dass ein Abschneiden beziehungsweise ein Übergehen von Messwerten durchgeführt wird, wenn die Geschwindigkeitsvarianz 30 oberhalb des Schwellwerts 36 liegt. Dadurch ist eine bessere und stabilere Auswertung der Personenerkennung beziehungsweise -klassifizierung in Bezug zur Fahrdynamik möglich, als dies rein über beispielsweise eine Pedalstellung ermöglicht ist. Es findet somit eine Analyse und eine Verwendung der Geschwindigkeitsvarianz 30 mit dem Überspringen und Zurücksetzen entsprechender Parameter statt, sollte die Geschwindigkeitsvarianz 30 oberhalb des Schwellwerts 36 liegen.

### Bezugszeichenliste

- 10: Identifizierungsvorrichtung
- 12: Sitz
- 14: Rückenlehne
- 16: Bezug
- 18: Schaumauflage
- 20: Drucksensor
- 22: Silikon-gefüllte Matte
- 24: elektronische Recheneinrichtung
- 26: Unterfederung
- 28: Geschwindigkeit
- 30: Geschwindigkeitsvarianz
- 32: relevante Situation
- 34: relative Varianz
- 36: Schwellwert
- 38: gefilterte relative Varianz
- 40: Startwert
- 42: Schwellwert
- 44: Schwellwert
- 46: Pfeil

## Patentansprüche

1. Verfahren zum Betreiben einer Identifizierungsvorrichtung (10) eines Sitzes (12) eines Kraftfahrzeugs, bei welchem eine Identifizierung eines Kindersitzes auf dem Sitz (12) oder eines Erwachsenen auf dem Sitz (12) mittels einer elektronischen Recheneinrichtung (24) der Identifizierungsvorrichtung (10) durchgeführt wird, und bei welchem in Abhängigkeit der Identifizierung eine Airbageinrichtung des Sitzes (12) aktiviert wird, und bei welchem eine relative Varianz (34) aus einem Verhältnis von einer Druckvarianz eines Drucks auf den Sitz (12) und einer Beschleunigungsvarianz einer Beschleunigung des Kraftfahrzeugs während einer Bewegung des Kraftfahrzeugs bestimmt wird und in Abhängigkeit von der relativen Varianz (34) die Identifizierung durchgeführt und Airbageinrichtung aktiviert wird, wobei eine Geschwindigkeitsvarianz (30) einer Geschwindigkeit (28) des Kraftfahrzeugs mittels der elektronischen Recheneinrichtung (24) bestimmt wird und in Abhängigkeit von der bestimmten Geschwindigkeitsvarianz (30) entschieden wird, ob während der Bewegung des Kraftfahrzeugs eine Identifizierung durchgeführt wird, **dadurch gekennzeichnet, dass** unterhalb eines vorgegebenen Geschwindigkeitsschwellwerts ein aktueller Startwert (40) für die relative Varianz (34) bestimmt wird.

2. Verfahren nach Anspruch 1,
**dadurch gekennzeichnet, dass**
oberhalb eines vorgegebenen Schwellwerts (36) für die Geschwindigkeitsvarianz (30) eine Identifizierung auf Basis der aktuell bestimmten relativen Varianz (34) unterdrückt wird.

3. Verfahren nach Anspruch 1 und 2,
**dadurch gekennzeichnet, dass**
oberhalb des Schwellwerts (36) der Geschwindigkeitsvarianz (30) der Startwert (40) der relativen Varianz (34) genutzt wird.

4. Verfahren nach einem der vorhergehenden Ansprüche,
**dadurch gekennzeichnet, dass**
die Geschwindigkeitsvarianz (30) in Abhängigkeit einer Filterung von Geschwindigkeitswerten und/oder in Abhängigkeit einer Anzahl von Geschwindigkeitswerten vorgegeben wird.

5. Verfahren nach einem der vorhergehenden Ansprüche,
**dadurch gekennzeichnet, dass**
zusätzliche eine Lenkwinkelvarianz eines Lenkwinkels bestimmt wird und in Abhängigkeit von der bestimmten Lenkwinkelvarianz entschieden wird, ob während der Bewegung des Kraftfahrzeugs eine Identifizierung durchgeführt wird.

6. Verfahren nach einem der vorhergehenden Ansprüche,
**dadurch gekennzeichnet, dass**
zusätzliche ein Steuersignal eines Assistenzsystems des Kraftfahrzeugs an die Identifizierungsvorrichtung (10) übertragen wird und in Abhängigkeit des übertragenen Steuersignals entschieden wird, ob während der Bewegung des Kraftfahrzeugs eine Identifizierung durchgeführt wird.

7. Verfahren nach einem der vorhergehenden Ansprüche,
**dadurch gekennzeichnet, dass**
mittels eines Drucksensors (20) in dem Sitz (12) der aktuelle Druck auf den Sitz (12) erfasst wird und in Abhängigkeit des aktuell erfassten Drucks die Druckvarianz mittels der elektronischen Recheneinrichtung (24) bestimmt wird.

8. Verfahren nach einem der vorhergehenden Ansprüche,
**dadurch gekennzeichnet, dass**
bei der Erkennung eines Kindersitzes die Airbageinrichtung deaktiviert wird und bei der Erkennung eines Erwachsenen die Airbageinrichtung aktiviert wird.

9. Identifizierungsvorrichtung (10) eines Sitzes (12) eines Kraftfahrzeugs zum Identifizieren eines Kindersitzes oder eines Erwachsenen auf dem Sitz (12), mit zumindest einer elektronischen Recheneinrichtung (24), wobei die Identifizierungsvorrichtung (10) zum Durchführen eines Verfahrens nach einem der Ansprüche 1 bis 8 ausgebildet ist.

## Claims

1. Method for operating an identification device (10) of a seat (12) of a motor vehicle, in which method identification of a child seat on the seat (12) or of an adult on the seat (12) is carried out by means of an electronic computing apparatus (24) of the identification device (10), and in which method an airbag apparatus of the seat (12) is activated depending on the identification, and in which method a relative variance (34) is determined from a ratio of a pressure variance of a pressure on the seat (12) and an acceleration variance of an acceleration of the motor vehicle whilst the motor vehicle is moving, and the identification is carried out and the airbag apparatus is activated depending on the relative variance (34), a speed variance (30) of a speed (28) of the motor vehicle being determined by means of the electronic computing apparatus (24), and a decision being made depending on the determined speed variance (30) as to whether identification is carried out whilst the motor vehicle is moving, **characterized in that** below a predetermined speed threshold value, a current starting value (40) for the relative variance (34) is determined.

2. Method according to claim 1,
**characterized in that**
above a predetermined threshold value (36) for the speed variance (30), identification on the basis of the currently determined relative variance (34) is suppressed.

3. Method according to claim 1 and claim 2,
**characterized in that**
above the threshold value (36) of the speed variance (30), the starting value (40) of the relative variance (34) is used.

4. Method according to any of the preceding claims,
**characterized in that**
the speed variance (30) is predetermined depending on a filtering of speed values and/or depending on a number of speed values.

5. Method according to any of the preceding claims,
**characterized in that**
additionally, a steering angle variance of a steering angle is determined and a decision is made depending on the determined steering angle variance as to whether identification is carried out whilst the motor vehicle is moving.

6. Method according to any of the preceding claims,
**characterized in that**
additionally, a control signal of an assistance system of the motor vehicle is transmitted to the identification device (10) and a decision is made depending on the transmitted control signal as to whether identification is carried out whilst the motor vehicle is moving.

7. Method according to any of the preceding claims,
**characterized in that**
the current pressure on the seat (12) is detected by means of a pressure sensor (20) in the seat (12) and the pressure variance is determined by means of the electronic computing apparatus (24) depending on the currently detected pressure.

8. Method according to any of the preceding claims,
**characterized in that**
when a child seat is detected, the airbag apparatus is deactivated, and when an adult is detected, the airbag apparatus is activated.

9. Identification device (10) of a seat (12) of a motor vehicle for identifying a child seat or an adult on the seat (12), comprising at least one electronic computing apparatus (24), wherein the identification device (10) is designed to carry out a method according to any of claims 1 to 8.

## Revendications

1. Procédé permettant le fonctionnement d'un dispositif d'identification (10) d'un siège (12) d'un véhicule automobile, dans lequel une identification d'un siège d'enfant sur le siège (12) ou d'un adulte sur le siège (12) est mise en œuvre à l'aide d'un dispositif de calcul électronique (24) du dispositif d'identification (10), et dans lequel une unité de coussin de sécurité gonflable du siège (12) est activée en fonction de l'identification, et dans lequel une variance relative (34) est déterminée à partir d'un rapport entre une variance de pression d'une pression sur le siège (12) et une variance d'accélération d'une accélération du véhicule automobile pendant un mouvement du véhicule automobile et, en fonction de la variance relative (34), l'identification est mise en œuvre et l'unité de coussin de sécurité gonflable est activée, dans lequel une variance de vitesse (30) d'une vitesse (28) du véhicule automobile est déterminée à l'aide du dispositif de calcul électronique (24) et, en fonction de la variance de vitesse (30) déterminée, il est décidé si une identification est mise en œuvre pendant le mouvement du véhicule automobile, **caractérisé en ce qu**'une valeur de départ actuelle (40) pour la variance relative (34) est déterminée en dessous d'une valeur seuil de vitesse prédéfinie.

2. Procédé selon la revendication 1,
**caractérisé en ce**
**qu'**au-dessus d'une valeur seuil (36) prédéfinie pour la variance de vitesse (30), une identification sur la base de la variance relative (34) actuellement déterminée est supprimée.

3. Procédé selon la revendication 1 et 2,
**caractérisé en ce**
**qu**'au-dessus de la valeur seuil (36) de la variance de vitesse (30), la valeur de départ (40) de la variance relative (34) est utilisée.

4. Procédé selon l'une des revendications précédentes,
**caractérisé en ce que**
la variance de vitesse (30) est prédéfinie en fonction d'un filtrage de valeurs de vitesse et/ou en fonction d'un nombre de valeurs de vitesse.

5. Procédé selon l'une des revendications précédentes,
**caractérisé en ce que**
de plus, une variance d'angle de braquage d'un angle de braquage est déterminée et, en fonction de la variance d'angle de braquage déterminée, il est décidé si une identification est mise en œuvre pendant le déplacement du véhicule automobile.

6. Procédé selon l'une des revendications précédentes,
**caractérisé en ce que**
de plus, un signal de commande d'un système d'assistance du véhicule automobile est transmis au dispositif d'identification (10) et il est décidé, en fonction du signal de commande transmis, si une identification est mise en œuvre pendant le déplacement du véhicule automobile.

7. Procédé selon l'une des revendications précédentes,
**caractérisé en ce que**
la pression actuelle sur le siège (12) est détectée à l'aide d'un capteur de pression (20) dans le siège (12) et la variance de pression est déterminée en fonction de la pression actuellement détectée à l'aide du dispositif de calcul électronique (24).

8. Procédé selon l'une des revendications précédentes,
**caractérisé en ce que**
lors de la reconnaissance d'un siège enfant, l'unité de coussin de sécurité gonflable est désactivée et lors de la reconnaissance d'un adulte, l'unité de coussin de sécurité gonflable est activée.

9. Dispositif d'identification (10) d'un siège (12) d'un véhicule automobile pour l'identification d'un siège d'enfant ou d'un adulte sur le siège (12), comportant au moins un dispositif de calcul électronique (24), dans lequel le dispositif d'identification (10) est conçu pour la mise en œuvre d'un procédé selon l'une des revendications 1 à 8.
